(19) Europäisches Patentamt
European Patent Office
Office européen des brevets

(11) EP 0 464 619 B1

(12) **EUROPEAN PATENT SPECIFICATION**

(45) Date of publication and mention of the grant of the patent:
**15.10.1997 Bulletin 1997/42**

(51) Int Cl.⁶: **G06F 3/033**, G06F 3/147

(21) Application number: **91110529.4**

(22) Date of filing: **26.06.1991**

(54) **Image information control apparatus and display system**

Bildinformationssteuergerät und Anzeigesystem

Appareil pour la commande d'informations d'image et dispositif d'affichage

(84) Designated Contracting States:
**AT BE CH DE DK ES FR GB GR IT LI LU NL SE**

(30) Priority: **27.06.1990 JP 171101/90**

(43) Date of publication of application:
**08.01.1992 Bulletin 1992/02**

(73) Proprietor: **CANON KABUSHIKI KAISHA**
**Tokyo (JP)**

(72) Inventor: **Inoue, Hiroshi,**
**c/o CANON KABUSHIKI KAISHA**
**Tokyo (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(56) References cited:
**WO-A-90/03019** **GB-A- 2 223 652**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 464 619 B1

Printed by Jouve, 75001 PARIS (FR)

## Description

### Field of the Invention

The present invention relates to a display system and, more particularly, to an image information control apparatus for use in a display system using a ferroelectric liquid crystal having a memory function.

### Related Background Art

The screen size and the resolution of a liquid crystal display system required in a personal computer (PC) or a workstation (WS) have been increased year by year, and the system is required to have compatibility with a conventional PC or WS.

A high-resolution graphic display "GSP34010 (tradename)" available from Texas Instruments which is a graphic processor widely used for general purposes provides a high-resolution graphic environment such as a Microsoft Windows (MS/Windows), a Presentation Manager (OS/2 available from Microsoft Corporation), or an X-Windows (a public domain licensed by Massachusetts Institute of Technology for use under a Unix environment) to users via GSP graphic software such as "DGIS (tradename)" available from Graphics Software System or "TIGA (tradename)" available from Texas Instruments.

Such GSP graphic software basically accesses a common VRAM (image information storage memory) because hardware of a GAP is commonly used. This function of hardware is a typical example of access to a VRAM of a one-frame buffer type. Therefore, VRAM access programming about mouse font display to be described below is a common method for the above-mentioned software and a typical example of a mouse font display method in VRAM access of a one-frame buffer type.

However, each of the above methods is invented for a display such as a CRT which is non-interlace-driven at a predetermined period, another means is further required for a device such as an FLCD (ferroelectric liquid crystal device) having a memory effect using both full-screen refresh multi-interlace scanning and partial write non-interlace driving. The present invention aims at applying this means to the FLCD without changing the GSP graphic software.

### SUMMARY OF THE INVENTION

It is an object of the present invention to provide a liquid crystal display system and, more particularly, a ferroelectric liquid crystal display system having improved compatibility with a CRT display system.

It is another object of the present invention to provide an image information control system having improved compatibility with a CRT display system.

According to the present invention there is provided an image information control apparatus and a display system, respectively, according to any one of the annexed claims 1 to 11 and 12, respectively.

### BRIEF DESCRIPTION OF THE DRAWINGS

Fig. 1 is a view for explaining mouse processing used in the present invention;
Fig. 2 is a block diagram showing a controller used in the present invention;
Fig. 3 is a block diagram showing a controller used in the present invention;
Fig. 4 is a view showing a routine of the mouse processing used in the present invention;
Fig. 5 is a view for explaining another mouse processing used in the present invention;
Fig. 6 is a view for explaining mouse processing used in the present invention;
Fig. 7 is a block diagram showing a controller used in the present invention;
Figs. 8A to 8C are views for explaining ORG processing used in the present invention;
Fig. 9 is a block diagram showing a controller used in the present invention;
Fig. 10 is a block diagram showing an example of a display state used in the present invention;
Fig. 11 is a block diagram showing a controller used in the present invention;
Fig. 12 is a block diagram showing a controller used in the present invention (according to claims 2 and 3);
Fig. 13 is a timing chart showing a controller of the present invention;
Fig. 14 is a schematic view showing signals and data used in the present invention; and
Figs. 15, 16, and 17 are views schematically showing states of a VRAM and a display screen.

### DETAILED DESCRIPTION OF THE PREFERRED EMBODIMENTS

Fig. 1 shows drawing processing according to "DGIS (tradename) ver. 2.0". The drawing processing routine shown in Fig. 1 is executed in the following order.

① DPYINT interrupt is generated when display scanning reaches:

$$DPYINT = Y - \Delta y.$$

② A background of a mouse area is read out once during $\Delta y$.
③ The mouse area is written twice.
④ A drawing program waits until VCOUNT = $\Delta y + h$.
⑤ A mouse font in a VRAM is erased (the background is copied once).

Means for executing partial writing in accordance with the above procedures will be described below.

① A gate 21 is turned on upon generation of DPYINT.
ON condition: IE x DIE x DIP = ON
IE...bit 21 of ST (status) register
DIP...bit 10 of INTENB register
DIP...bit 10 of INTPEND register
Actually, a higher priority interrupt must be taken into consideration. Therefore,
Necessary condition:
When a vector address of DPYINT is loaded in a program counter (PC) of a GSP, a gate of a mouse circuit is turned on.

$$PC = [DPYINT] \rightarrow \text{"ON"}$$

② A VRAM 22 is accessed.
③ The first address is stored in a register 23.
This start address register 23 stores the start of an address for partial writing.
④ The content (first address) of the register 23 is compared with VCOUNT-VEBLNK by a comparator 24.
⑤ If the comparison result indicates "coincidence", the gate 21 is turned off. Alternatively,
⑥ If the interrupt routine is finished, the gate 21 is turned off.

The function of ⑥ is provided because although an interrupt routine is evoked by DPYINT, the routine is not always a mouse routine. The interrupt routine evoked by DPYINT is sometimes used as not a mouse routine but a timer routine. When the routine is used as a timer, no VRAM access from an application is present. At this time, only the end of the interrupt routine can be detected. Therefore, if no access from a host side to a VRAM is present, the interrupt routine from DPYINT is determined to be a timer routine.

This is necessary for an FLCD H/W interface.

Relationship between partial writing and GSP

When the gate 21 shown in Fig. 2 is turned off, data is transferred to an FLCD 25.

Assume that the FLCD is currently executing partial writing in response to an external sync signal and CRT refresh is continued in the GSP. I. When a program is to monitor VCOUNT (with respect to "access inhibition to VRAM : stop program of GSP"), monitoring may not be correctly performed after the VRAM access is inhibited because the VCOUNT performs count-up even while the VRAM access is inhibited. (Scanning of the FLCD is asynchronous with that of the CRT, and scanning times are different.) II. While mouse partial writing is performed (with respect to "VCOUNT and mouse partial writing external synchronization"), generation of the next DPYINT must be inhibited.

Therefore, external synchronization between ② VCOUNT and mouse partial writing is essential.

In this specification, "synchronous partial writing" means that a program and FLCD scanning are synchronized with each other such that other programs wait until drawing scanning on the FLCD is finished.

Erasure of mouse font on FLCD

An original DGIS or TIGA for a CRT will be described below. After a mouse font is written in the VRAM, the VCOUNT is monitored, and the mouse font is erased from the VRAM when scanning of a display reaches the end of the font.

However, scanning of the FLCD is different from that of the CRT. That is, since the CRT is of a non-interlace type while the FLCD is of a multi-interlace type, the original DGIS or TIGA cannot be used in the FLCD. If the original is used in the FLCD, a rapid moving mouse appears as a font disconnected into slits by a multi-interlace.

Therefore, the hardware block diagram described above is improved as shown in Fig. 3.

A main improvement is that a register 31 is added after the register 23 for storing an address accessed for the first time. The flow of a sequence is also improved.

Sequence:

①The DPYINT turns on the gate 21 and sets an accessed flag.
②An address accessed for the first time is compared with [VCOUNT-VEBLKN] by a comparator 24.
③If the comparison result indicates "coincidence", the gate 21 is turned off.
④Ordinary mouse partial writing is started, and HSYNC from the FLCD is counted.
  In a case of Ⓑ ("="), a mouse is standing or horizontally moved.
⑤After the partial writing, the first address and the count value are stored as current data in a register represented by Ⓐ.
⑥The flow is escaped from the mouse routine.

In a case of © ("≠"), the mouse is assumed to move somewhere. In this case, the following two methods are available.

One is:

5-a. After partial rewriting, access from the HOST side to the VRAM is inhibited by H/W, and the VCOUNT is stopped.

6-a. Partial rewriting corresponding to data of Ⓐ is started.

The other is:

5-b. An overlapped area is calculated as follows.

e0 and e1 shown in Fig. 4 are determined by:

$$e0 = S0 + count\ 0$$

$$e1 = s1 + count\ 1$$

<u>Calculations</u>

Overlapping condition:

$$|s0 - s1| + |e0 - e1| < |count0 + count1|$$

$$(|s0 - s1| + |s0 - s1| + count0 - count1|$$

$$< |count0 + count1|)$$

Separation condition:

$$|s0 - s1| + |e0 - e1| > |count0 + count1|$$

$$(|s0 - sl + |s0 - s1 + count0 - count1|$$

$$> |count0 + count1|)$$

∵ whenever the sequence comes to this condition,
(s0, count0) ≠ (s1, count1).

⑥-i) If overlapping occurs, partial rewriting is started as follows;

case I ... s0 - s1 < 0

start ... s0

count ... ls0 - s1l

case II ... s0 - s1 > 0

start ... s1 + count1

count ... le0 - e1l

= ls0 - s1 + count0 - count1l

In the present invention as described above, an access area has [count] and [VCOUNT] routines from [start].

⑥-ii) If areas are separated, partial rewriting has (s0, count1] and [VCOUNT] stop routines.

⑦After the partial rewriting is finished, the first address and the count value are stored as current data in a register represented by Ⓐ.

⑧The VCOUNT which is kept stopped is released, and the flow is escaped from the mouse routine.

Fig. 5 shows drawing processing such as "TIGA ver. 1.0 (tradename)" in which two DPYINTs use mouse processes.

In a CRT, the first DPYINT is used in the same manner as the DGIS except for deletion of a font from a VRAM. The second DPYINT is used in font deletion on the VRAM.

Therefore, the following processing is applied in the FLCD H/W interface.

①[DPYINT] - [VEBLNK] is compared with an address accessed for the first time (there is no "=").

②-i) If the comparison result is "< 0" (i.e., if the DPYINT is located above the first address), the same processing (including the deletion process) as shown in Fig. 1 is executed.

②-ii) If the comparison result is "> 0", (i.e., if the DPYINT is located below the first address), the flow is escaped from the routine without doing anything.

The VRAM is sometimes filled from the bottom to the top with PIXBLT (a specific microcode of the GSP for accessing an area continuous with respect to the X-Y space in the VRAM ). For example, a case in which a mouse font is filled from the lower to upper portions as shown in Fig. 6 will be described below. In this case, the mouse process waits until scanning of the FLCD comes to the first address and starts partial writing. In an actual operation, however, a program in the GSP such as the DGIS or TIGA starts the next processing. Although the mouse font disappears from the VRAM, the interface circuit transfers the partial write data to the FLCD.

Partial writing cannot be performed from the lower to upper portions for the following reason.

The VCOUNT is set in a position closest to the DPYINT, i.e., set in an upper portion which is the last accessed address. However, a gate "OFF" timing is set at the first accessed address. Therefore, a comparison result indicating "coincidence" is never obtained in the comparator, and the gate is not turned off. Therefore, partial writing is not started.

To solve this problem and to provide an "ORG" function of the GSP, hardware shown in Fig. 7 is prepared.

Referring to Fig. 7, a start address 1②has a function of comparing the last address with the current address①at a timing of accessing the VRAM.

Case I :①<②→ start address 1 =①(leave)

Case II :①>②→ start address 1 =①→②(replace)

The hardware shown in Fig. 7 is designed to compare the start address with [VCOUNT - VEBLNK] at a timing of HSYNC when it completely compares all of data. For this function, this register has a function of performing comparison with [VCOUNT - VEBLNK].

In the present invention, this determination can be performed in accordance with the content of an ORG bit shown in Figs. 8A to 8C. In the GSP, however, only the ORG bit is not always used to access the VRAM in the opposite direction, i.e., from the lower portion. Another control bit is used to access (to perform a filling function for) a VRAM such as a PIXBLT. For example, the ninth bit PBV of a CONTROL register of the GSP controls the vertical direction of pixel processing of a PIXBLT instruction. That is, the H/W interface must have the above functions for performing determination by itself.

Figs. 8A and 8B show display states obtained when ORG = 0 and ORG = 1,, respectively. Fig. 8C shows a manner in which when the ORG bit is inverted, a reference point of relative addressing is inverted although a process is not changed at all.

Standing mouse countermeasure

In high-order multi-interlace FLCD refresh, the number of times of mouse partial writing caused by DPYINT interrupt generated for each field period becomes larger than the number of access times in a peripheral refresh portion. For this reason, a contrast difference is produced between the mouse partial writing area and the refresh area and becomes visible as a crosstalk. A circuit shown in Fig. 9 is proposed to prevent this phenomenon.

In addition to the functions of the circuits shown in Figs. 2, 3, and 7, the circuit shown in Fig. 9 has a function of monitoring changes in mouse coordinates and font size and determining in accordance with the monitor result whether a mouse font is to be left in a VRAM. Also, this circuit controls an exclusive flag of the circuit. When a mouse is standing, this circuit basically permits mouse partial writing only once but does not perform further mouse partial writing even if DPYINT interrupt is generated.

In this case, a care must be paid for the last half function of the circuit shown in Fig. 9.

In mouse display control caused by the original (CRT) DPYINT interrupt, a mouse font is deleted from the VRAM after the mouse is displayed. However, according to this circuit, refresh is performed without performing partial writing when the mouse is standing. since no mouse font is present in the VRAM, the mouse is deleted from the display by this refresh. Therefore, another means must be added to the original mouse display control. An algorithm of an additional control unit for solving this problem will be described below (see the lower portion of Fig. 9).

The standing mouse countermeasure circuit for mouse partial writing shown in Fig. 9 checks changes in two-dimensional coordinates and font size of a mouse. In this case,

a. If the coordinates and the font size of the mouse are equal to each other,

(1) If an exclusive flag is already set.
①No mouse partial writing is performed, and the flow returns to refresh if no ordinary partial write request is present (return of control).

(2) If the exclusive flag is not set.

①An area of a mouse position is stored (storage of a background),
②A mouse font is written in a VRAM,
③The exclusive flag is set, and
④Control is returned.

b. If the coordinates and the font size of the mouse are not equal to each other,

(1) If the exclusive flag is already set.

①To delete the mouse font on the VRAM, the background stored in item a. (2)① above is written in the VRAM,
②The exclusive flag is cleared, and
③Control is returned.

(2) If the exclusive flag is not set.

①Control is returned (the standing mouse countermeasure circuit does not execute anything).

When the mouse is standing, a mouse font which is not originally set in the VRAM is basically left therein.

To the above standing mouse circuit shown in Fig. 9, a circuit which operates while taking a standing mouse in a scroll screen into consideration is preferably added. Fig. 10 shows a standing mouse in a scroll screen. In this case, even when the standing mouse countermeasure circuit shown in Fig. 9 normally operates, ordinary partial writing is not determined. Therefore, a mouse font is left on the VRAM to cause the mouse to scroll together with the scroll screen. For this reason, the exclusive flag shown in Fig. 9 must be monitored by the ordinary partial writing circuit. If the flag is already set, the mouse font in the VRAM is deleted and the flow transits to ordinary partial write control before an ordinary partial write operation is performed.

Referring to Fig. 10, an FLCD 101 includes a scroll screen 102 which moves in a scroll direction 103 and a mouse font 104.

Fig. 11 shows another preferable embodiment of the present invention. A circuit shown in Fig. 11 executes partial writing by the following routine.

①A drawing content accessed to a VRAM in an order of①→②→③is detected by an external register as line access in a display scanning direction. In this embodiment, data corresponding to a detected y-line address is set

to be "1".
②Register data according to access information in an arbitrary sampling period to the register is externally transferred after another arbitrary sampling period.
③Another circuit calculates start and end addresses (area) of the accessed y-line from the transferred register data.
④A calculation result is transferred to a memory for storage.
⑤a. If a flag is not set, partial rewriting is started in accordance with the content of the memory.
⑤b. If the flag is already set, a mouse font is deleted from the VRAM before execution of ordinary partial rewriting.

Fig. 12 is an internal block diagram showing a graphic processor used in the present invention, in which a broken line portion indicates a refresh control signal generating unit and a partial write control signal generating unit independent of each other. Control is performed such that HSYNC is used as an input signal from the device side in the unit for partial write and is used as an output signal for the device side in the unit for refresh. For this reason, the former unit is called an "internal synchronizing circuit", and the latter unit is called an "external synchronizing circuit". A timing program for the HSYNC or other signals can be controlled by setting values of video timing registers shown in Fig. 12. In this embodiment, since HSYNC of the "external synchronizing circuit" is controlled in external synchronization with a device, a VCOUNT for counting the HSYNC is controlled by a timing from the device. During refresh, the "internal synchronizing circuit" automatically outputs the HSYNC in accordance with a programmed register value, the VCOUNT performs counting asynchronous with the device.

In each of the above-mentioned cases requiring synchronization, however, at the same time the mouse partial writing is started, the VCOUNT on the refresh side performs count with synchronization/rock with respect to the VCOUNT on the "external synchronizing circuit" side.

The VCOUNT, the HCOUNT, the horizontal and vertical timing registers, the DPYINT, the ORG, the IE, the DIE, the DIP, the LAD, the $\overline{\text{RAS}}$, the $\overline{\text{CAS}}$, the PIXBLT, the PC, the IRET, and the vector address described above have the following functions.

1) VCOUNT

The VCOUNT is a 16-bit counter incremented for each $\overline{\text{HSYNC}}$. (The VCOUNT is incremented by the same clock edge at which the HCOUNT is internally reset to "0", thereby counting scan lines on a video display.)

2) HCOUNT

The HCOUNT is a 16-bit counter which is incremented by the trailing edge of a video input clock to count the number of video clocks for every horizontal scan line.

In an internal synchronization mode, the HCOUNT is reset to "0" at the trailing edge of the subsequent video clock when HCOUNT = HTOTAL. In an external synchronization mode, the HCOUNT is reset to "0" when the HSYNC is rendered "LOW".

3) Horizontal and vertical timing registers

The horizontal and vertical timing registers are shown in Fig. 14.

- Horizontal timing registers

HCOUNT A register for counting video clocks for each horizontal scan line.
HESYNC A register for designating a timing at which the $\overline{\text{HSYNC}}$ signal is ended.
HEBLNK A register for designating a timing at which a horizontal blanking period is ended.
HSBLNK A register for designating a timing at which a the horizontal blanking period is started.
HTOTAL A register for designating a total number of video clocks permitted for each horizontal scan line.

- Vertical timing registers

VCOUNTA register for counting horizontal scan lines on a screen display.
VESYNCA register for designating a timing at which the $\overline{\text{VSYNC}}$ signal is ended.
VEBLNKA register for designating a timing at which a vertical blanking period is ended.
VSBLNKA register for designating a timing at which the vertical blanking period is started.
VTOTALA register for designating the value of the VCOUNT at a timing at which the VSYNC signal is started.

4) DPYINT

The DPYINT is a register for designating a timing at which display interrupt is requested. The content of the DPYINT is compared with that of the VCOUNT register. If VCOUNT = DPYINT, the display interrupt is requested to the GSP. The DPYINT is used to synchronize software with refresh of a screen.

5) ORG

The ORG is bit 10 of a DPYCTL register (including several parameters for controlling a shift register transfer cycle for using a VRAM and a video timing signal). The ORG controls the origin of a screen coordinate system.

ORG = 0 The origin of X and Y coordinates is present at the upper left corner of a screen.
ORG = 1 The origin of X and Y coordinates is present at the lower left corner of a screen.

6) IE

The IE is bit 21 of a status register (32-bit register for representing the state of a processor).
Interrupt Enable Bit.

IE = 0 All interrupts inhibited
IE = 1 Permitted by interrupt mask

7) DIE

The DIE is bit 10 of an INTENB register (including an interrupt mask for selecting inhibition/permission of three internal interrupt requests and two external interrupt requests).

DIE = 0 Display interrupt inhibited
DIE = 1 Display interrupt permitted

8) DIP

The DIP is bit 10 of an INTPEND register (indicating an interrupt request which is currently pending). The DIP represents a pending state of display interrupt and is set to "1" when DPYINT = VCOUNT.

DIP = 0 No display interrupt request present
DIP = 1 Display interrupt request generated

9) LAD

The LAD is a local address/data bus. The LAD directly supplies multiplexed row, column, and data addresses required to drive a DRAM and a VRAM.

10) $\overline{RAS}$

The $\overline{RAS}$ is a local row address strobe.

11) $\overline{CAS}$

The $\overline{CAS}$ is a local column address strobe.

12) PIXBLT

The PIXBLT is a drawing instruction of the GSP. The PIXBLT expands a source pixel array into a destination pixel array or transfers or processes it.

13) PC

The PC is a program counter. The PC is an exclusive 32-bit register indicating an instruction word to be executed next.

14) IRET

The IRET is a return instruction from the interrupt routine.

15) Vector address

The vector address is an address for a routine branched when interrupt is generated.

1. Necessity of special H/W for mouse

According to the present invention, the mouse display algorithm in the DGIS or the TIGA is interrupt processing synchronized with refresh on a screen, unlike other drawing operations. A mouse is displayed using display interrupt in a VRAM only when required and is deleted from the VRAM when mouse display interrupt processing is ended. By adopting this algorithm, smooth mouse display not adversely affected by other drawing operations can be realized by using the GSP. However, since this algorithm is based on a 60-Hz non-interlace of a CRT, a special partial write H/W for an FLCD is necessary. In addition, since the mouse is deleted from the VRAM after the interrupt processing, a partial write H/W different synchronized with display interrupt unlike other drawing operations is required.

2. Necessity of deletion of mouse font from FLCD

According to the present invention, 60-Hz non-interlace scanning is performed on a CRT. Therefore, if a mouse font is deleted from a VRAM when display interrupt processing is ended, the immediately preceding mouse font can be deleted from a CRT screen in the subsequent display interrupt by only developing a mouse font in a VRAM at a new position and scanning it (see Fig. 15). However, multi-interlace scanning is performed in an FLCD. Therefore, if scanning of a mouse font at a new position is merely performed in the subsequent interrupt, a portion of the immediately preceding mouse font subjected to the multi-interlace scanning remains as a deleted font (see Fig. 16). For this reason, partial writing must be performed to delete a mouse font in the FLCD (see Fig. 17). In order to perform deletion, ① a mouse font is left in a VRAM until the deletion is finished, or ② a mouse font is deleted from a VRAM and partial writing for deletion is prevented from being executed on a portion in which the mouse is scanned (because the mouse font is already deleted by scanning for mouse display).

Fig. 15 schematically shows flow charts of drawing processing in a VRAM and a display state on a CRT display screen. Fig. 16 schematically shows flow charts of drawing processing on a VRAM and a display state on an FLCD display screen, in which deletion of mouse display is omitted. Fig. 17 schematically shows flow charts in which deletion of mouse display is executed in the flow chart shown in Fig. 2. Referring to Fig. 17, a time elapses in an order of processing steps ① to ⑫.

## Claims

**1.** An image information control apparatus comprising:

a. first means for recognizing scanning of a position of image information;
b. a first memory unit for, when said first means recognizes scanning of the position of image information, detecting and storing an address accessed to an image information storage memory, the access being started by the recognition in units of lines in a scanning direction;
c. a second memory unit for storing a line address detected and stored for the first time;
d. second means for comparing contents of said first means for recognizing scanning of the position of image information with contents of said second memory unit;
e. third means for interrupting the function of said first means on the basis of the comparison result of said second means; and
f. fourth means for interrupting the function of said first means when drawing processing, control of which is started by scanning the position of image information, is ended.

2. An apparatus according to claim 1, further comprising means, having internal and external synchronizing circuits, for independently operating said internal and external synchronizing circuits.

3. An apparatus according to claim 1, further comprising:

means for automatically generating a scan line control signal of a matrix electrode and an image information transfer control signal by a combination of programmable parameters; and
means for operating the two types of control signals independently of each other.

4. An apparatus according to claim 1, wherein counting of scanning times of matrix electrode scan lines in the drawing processing, control of which is started by scanning the position of image information, is controlled by a sync signal of a device.

5. An apparatus according to claim 1, wherein counting of scanning times of matrix electrode scan lines in the drawing processing, control of which is started by scanning the position of image information, is controlled by a sync signal of a device, and the counting is synchronized with an operation of means for automatically generating a matrix electrode scan line control signal and an image information transfer control signal by a combination of programmable parameters.

6. An apparatus according to claim 1, further comprising a third memory unit for storing the number of lines detected upon access to said image information storage memory before the interruption of said first means in accordance with contents of said second memory unit and the drawing processing, control of which is started by scanning the position of image information.

7. An apparatus according to claim 6, further comprising comparing means for comparing contents of said third memory unit with the number of lines detected upon access to said image information storage memory until the interruption of said first means in accordance with contents of said third memory unit, the contents of said second memory unit upon interruption of the function of said first means, and the drawing processing, control of which is started by scanning a position of image information.

8. An apparatus according to claim 7, wherein after partial writing corresponding to the contents of said first memory unit is executed in accordance with the comparison result of said comparing means,

a. the number of lines detected upon access to said image information storage memory until the interruption of said first means is stored in said third memory unit in accordance with the contents of said second memory unit and the drawing processing, control of which is started by scanning the position of image information on a display device, and the drawing processing, control of which is started by scanning the position of image information on a display device is ended, or
b. access from the drawing processing to said image information storage memory is inhibited, counting of scanning times of scan lines of a device is interrupted, and partial writing corresponding to the contents of said third memory is executed, or

presence/absence of overlapping of access data in the scanning direction is detected in accordance with the number lines detected upon access to said image information storage memory until the interruption of said first means in accordance with the contents of said second memory unit upon interruption of the function of said first means and the drawing processing, control of which is started by scanning the position of image information on a display device, and the contents of said third memory unit, calculation of a partial write area corresponding to the detection result is performed, and partial writing is executed while the counting of scanning times of scan lines on said device is interrupted, and
the number of lines detected upon access to said image information storage memory until the interruption of said first means in accordance with the contents of said second memory unit and the drawing processing, control of which is started by scanning the position of image information on said display device is stored in said third memory, the interruption of counting of scanning times of scan lines on said device is released, and the drawing processing, control of which is started by scanning the position of image information on said display device, is ended.

9. An apparatus according to claim 1, wherein said apparatus has a function of, when line addresses are stored in said second memory unit, comparing sizes of the addresses in an order of access, and selecting a line address to be stored in accordance with the comparison result.

**10.** An apparatus according to claim 1, further comprising a comparing unit for, when a line address detected and stored for the first time is to be stored in said second memory unit, comparing two-dimensional coordinates detected and stored for the first time with an area accessed until the drawing processing, control of which is started by scanning the position of image information on said display device, is ended, and comparing two-dimensional coordinates detected and stored previously with an area accessed until the drawing processing is ended.

**11.** An apparatus according to claim 10, further comprising a fourth memory controlled in accordance with the comparison result of said comparing unit,

wherein image information to a VRAM corresponding to the position of image information on said display device is controlled in accordance with a state of said fourth memory.

**12.** A display system comprising a display panel and an image information control apparatus according to any one of the preceding claims 1 to 11.

**Patentansprüche**

**1.** Bildinformationssteuergerät mit

a) einer ersten Einrichtung zur Erkennung einer Abtastung einer Position von Bildinformationen,
b) einer ersten Speichereinrichtung zur Erfassung und Speicherung einer Adresse, auf die in einer Bildinformations-Speichereinrichtung zugegriffen wird, wenn die erste Einrichtung die Abtastung der Position von Bildinformationen erkennt, wobei der Zugriff durch die Erkennung zeilenweise in einer Abtastrichtung gestartet wird,
c) einer zweiten Speichereinrichtung zur Speicherung einer Zeilenadresse, die erfaßt und zum ersten mal gespeichert wird,
d) einer zweiten Einrichtung zum Vergleich von Inhalten der ersten Einrichtung zur Erkennung der Abtastung der Position von Bildinformationen mit Inhalten der zweiten Speichereinrichtung,
e) einer dritten Einrichtung zur Unterbrechung der Funktion der ersten Einrichtung auf der Grundlage des Vergleichsergebnisses der zweiten Einrichtung und
f) einer vierten Einrichtung zur Unterbrechung der Funktion der ersten Einrichtung, wenn eine Zeichnungsverarbeitung, deren Steuerung durch Abtastung der Position von Bildinformationen beginnt, beendet wird.

**2.** Gerät nach Anspruch 1, ferner mit einer Einrichtung mit internen und externen Synchronisationsschaltungen zum unabhängigen Betreiben der internen und externen Synchronisationsschaltungen.

**3.** Gerät nach Anspruch 1, ferner mit

einer Einrichtung zur automatischen Erzeugung eines Abtastzeilen-Steuersignals einer Matrixelektrode und eines Bildinformationsübertragungs-Steuersignals durch eine Kombination programmierbarer Parameter und einer Einrichtung zum Betreiben der zwei Arten von Steuersignalen unabhängig voneinander.

**4.** Gerät nach Anspruch 1, wobei das Zählen von Abtastzeiten von Matrixelektroden-Abtastzeilen bei der Zeichnungsverarbeitung, deren Steuerung durch die Abtastung der Position von Bildinformationen gestartet wird, durch ein Sync-Signal einer Vorrichtung gesteuert wird.

**5.** Gerät nach Anspruch 1, wobei das Zählen von Abtastzeiten von Matrixelektroden-Abtastzeilen bei der Zeichnungsverarbeitung, deren Steuerung durch Abtastung der Position von Bildinformationen gestartet wird, durch ein Sync-Signal einer Vorrichtung gesteuert wird, und das Zählen mit einem Betrieb einer Einrichtung zur automatischen Erzeugung eines Matrixelektroden-Abtastzeilen-Steuersignals und eines Bildinformationsübertragungs-Steuersignals durch eine Kombination von programmierbaren Parametern synchronisiert wird.

**6.** Gerät nach Anspruch 1, ferner mit einer dritten Speichereinrichtung zur Speicherung der Anzahl von auf den Zugriff auf die Bildinformations-Speichereinrichtung vor der Unterbrechung der ersten Einrichtung hin erfaßten Zeilen entsprechend Inhalten der zweiten Speichereinrichtung und der Zeichnungsverarbeitung, deren Steuerung durch Abtastung der Position von Bildinformationen gestartet wird.

7. Gerät nach Anspruch 6, ferner mit einer Vergleichereinrichtung zum Vergleich von Inhalten der dritten Speichereinrichtung mit der Anzahl von auf den Zugriff auf die Bildinformations-Speichereinrichtung bis zur Unterbrechung der ersten Einrichtung hin erfaßten Zeilen entsprechend Inhalten der dritten Speichereinrichtung, den Inhalten der zweiten Speichereinrichtung auf die Unterbrechung der Funktion der ersten Einrichtung hin und der Zeichnungsverarbeitung, deren Steuerung durch Abtastung einer Position von Bildinformationen gestartet wird.

8. Gerät nach Anspruch 7, wobei nach der Ausführung eines teilweisen Schreibens entsprechend den Inhalten der ersten Speichereinrichtung entsprechend dem Vergleichsergebnis der Vergleichereinrichtung

   a) die Anzahl von Zeilen, die auf den Zugriff auf die Bildinformations-Speichereinrichtung bis zur Unterbrechung der ersten Einrichtung hin erfaßt werden, in der dritten Speichereinrichtung entsprechend den Inhalten der zweiten Speichereinrichtung und der Zeichnungsverarbeitung gespeichert wird, deren Steuerung durch Abtastung der Position von Bildinformationen auf einer Anzeigevorrichtung gestartet wird, und die Zeichnungsverarbeitung, deren Steuerung durch Abtastung der Position von Bildinformationen auf einer Anzeigevorrichtung gestartet wird, beendet wird, oder
   b) ein Zugriff von der Zeichnungsverarbeitung auf die Bildinformations-Speichereinrichtung verhindert wird, das Zählen von Abtastzeiten von Abtastzeilen einer Vorrichtung unterbrochen wird, und ein teilweises Schreiben entsprechend den Inhalten des dritten Speichers ausgeführt wird, oder

      das Vorhandensein/Fehlen einer Überlappung von Zugriffsdaten in der Abtastrichtung entsprechend der Anzahl von Zeilen, die auf den Zugriff auf die Bildinformations-Speichereinrichtung bis zur Unterbrechung der ersten Einrichtung hin erfaßt werden, entsprechend den Inhalten der zweiten Speichereinrichtung auf die Unterbrechung der Funktion der ersten Einrichtung hin und der Zeichnungsverarbeitung, deren Steuerung durch Abtastung der Position von Bildinformationen auf einer Anzeigevorrichtung gestartet wird, und den Inhalten der dritten Speichereinrichtung erfaßt wird, eine Berechnung eines teilweisen Schreibbereichs entsprechend dem Erfassungsergebnis durchgeführt wird, und ein teilweises Schreiben ausgeführt wird, während das Zählen von Abtastzeiten von Abtastzeilen auf der Vorrichtung unterbrochen wird, und die Anzahl von auf den Zugriff auf die Bildinformations-Speichereinrichtung bis zur Unterbrechung der ersten Einrichtung hin erfaßten Zeilen entsprechend den Inhalten der zweiten Speichereinrichtung und der Zeichnungsverarbeitung, deren Steuerung durch Abtastung der Position von Bildinformationen auf der Anzeigevorrichtung gestartet wird, in dem dritten Speicher gespeichert wird, die Unterbrechung des Zählens von Abtastzeiten von Abtastzeilen auf der Vorrichtung ausgesetzt wird und die Zeichnungsverarbeitung, deren Steuerung durch Abtastung der Position von Bildinformationen auf der Anzeigevorrichtung gestartet wird, beendet wird.

9. Gerät nach Anspruch 1, wobei das Gerät bei der Speicherung von Zeilenadressen in der zweiten Speichereinrichtung eine Funktion zum Vergleich von Größen der Adressen in einer Zugriffsreihenfolge und zur Auswahl einer zu speichernden Zeilenadresse entsprechend dem Vergleichsergebnis aufweist.

10. Gerät nach Anspruch 1, ferner mit einer Vergleichereinrichtung zum Vergleich von erfaßten und zum ersten mal gespeicherten zweidimensionalen Koordinaten mit einem Bereich, auf den bis zur Beendigung der Zeichnungsverarbeitung zugegriffen wird, deren Steuerung durch Abtastung der Position von Bildinformationen auf der Anzeigevorrichtung gestartet wird, und zum Vergleich von erfaßten und zuvor gespeicherten zweidimensionalen Koordinaten mit einem Bereich, auf den bis zur Beendigung der Zeichnungsverarbeitung zugegriffen wird, wenn eine erfaßte und zum ersten mal gespeicherte Zeilenadresse in der zweiten Speichereinrichtung zu speichern ist.

11. Gerät nach Anspruch 10, ferner mit einem entsprechend dem Vergleichsergebnis der Vergleichereinrichtung gesteuerten vierten Speicher, wobei Bildinformationen für einen VideoSchreib-Lese-Speicher entsprechend der Position von Bildinformationen auf der Anzeigevorrichtung gemäß einem Zustand des vierten Speichers gesteuert werden.

12. Anzeigesystem mit einem Anzeigefeld und einem, Bildinformationssteuergerät nach einem der vorhergehenden Ansprüche 1 bis 11.

**Revendications**

1. Appareil de commande d'informations d'image comportant :

a. des premiers moyens destinés à reconnaître un balayage d'une position d'une information d'image ;
b. une première unité à mémoire pour, lorsque lesdits premiers moyens reconnaissent un balayage de la position d'une information d'image, détecter et stocker une adresse d'accès à une mémoire de stockage d'informations d'image, l'accès commençant par la reconnaissance d'unités de lignes dans une direction de balayage ;
c. une seconde unité à mémoire pour stocker une adresse de ligne détectée et stockée pour la première fois ;
d. des deuxièmes moyens destinés à comparer le contenu desdits premiers moyens pour reconnaître un balayage de la position de l'information d'image avec le contenu de ladite seconde unité à mémoire ;
e. des troisièmes moyens destinés à interrompre la fonction desdits premiers moyens sur la base du résultat de la comparaison desdits deuxièmes moyens ; et
f. des quatrièmes moyens destinés à interrompre la fonction desdits premiers moyens lorsqu'un traitement de dessin, dont la commande est déclenchée par un balayage de la position de l'information d'image, s'achève.

**2.** Appareil selon la revendication 1, comportant en outre des moyens, ayant des circuits intérieurs et extérieurs de synchronisation, pour faire fonctionner indépendamment lesdits circuits intérieurs et extérieurs de synchronisation.

**3.** Appareil selon la revendication 1, comportant en outre :

des moyens destinés à générer automatiquement un signal de commande de ligne de balayage d'une électrode de matrice et un signal de commande de transfert d'information d'image par une combinaison de paramètres programmables ; et
des moyens pour activer les deux types de signaux de commande indépendamment l'un de l'autre.

**4.** Appareil selon la revendication 1, dans lequel un comptage de temps de balayages de lignes de balayage d'électrodes de matrice dans le traitement de dessin, dont la commande est déclenchée par un balayage de la position d'une information d'image, est commandé par un signal de synchronisation d'un dispositif.

**5.** Appareil selon la revendication 1, dans lequel un comptage de temps de balayages de lignes de balayage d'électrodes de matrice dans le traitement de dessin, dont la commande est déclenchée par un balayage de la position d'une information d'image, est commandé par un signal de synchronisation d'un dispositif, et le comptage est synchronisé avec une opération effectuée par des moyens destinés à générer automatiquement un signal de commande de ligne de balayage d'électrode de matrice et un signal de commande de transfert d'information d'image par une combinaison de paramètres programmables.

**6.** Appareil selon la revendication 1, comportant en outre une troisième unité à mémoire pour stocker le nombre de lignes détectées lors d'un accès à ladite mémoire de stockage d'informations d'image avant l'interruption desdits premiers moyens en fonction du contenu de ladite deuxième unité à mémoire et du traitement de dessin dont la commande est déclenchée par un balayage de la position d'une information d'image.

**7.** Appareil selon la revendication 6, comportant en outre des moyens de comparaison destinés à comparer le contenu de ladite troisième unité à mémoire au nombre de lignes détectées lors d'un accès à ladite mémoire de stockage d'informations d'image jusqu'à l'interruption desdits premiers moyens en fonction du contenu de ladite troisième unité à mémoire, du contenu de ladite deuxième unité à mémoire lors d'une interruption de la fonction desdits premiers moyens, et du traitement de dessin dont la commande est déclenchée par un balayage d'une position d'informations d'image.

**8.** Appareil selon la revendication 7, dans lequel, après qu'une écriture partielle correspondant au contenu de ladite première unité à mémoire a été exécuté conformément au résultat de la comparaison desdits moyens de comparaison,

a. le nombre de lignes détectées lors d'un accès à ladite mémoire de stockage d'informations d'image jusqu'à l'interruption desdits premiers moyens est stocké dans ladite troisième unité à mémoire en fonction du contenu de ladite deuxième unité à mémoire et du traitement de dessin dont la commande est déclenchée par un balayage de la position d'une information d'image sur un dispositif d'affichage, et le traitement de dessin dont la commande est déclenchée par un balayage de la position d'une information d'image sur un dispositif d'affichage, est achevé, ou
b. un accès à partir du traitement de dessin à ladite mémoire de stockage d'informations d'image est empêché, un comptage de temps de balayages de lignes de balayage d'un dispositif est interrompu, et une écriture partielle correspondant au contenu de ladite troisième mémoire est exécutée, ou

la présence/absence d'un chevauchement de données d'accès dans la direction de balayage est détectée en fonction du nombre de lignes détectées lors d'un accès à ladite mémoire de stockage d'informations d'image jusqu'à l'interruption desdits premiers moyens en fonction du contenu de ladite deuxième unité à mémoire lors d'une interruption de la fonction desdits premiers moyens et du traitement de dessin, dont la commande est déclenchée par un balayage de la position d'une information d'image sur un dispositif d'affichage, et du contenu de ladite troisième unité à mémoire, un calcul d'une zone d'écriture partielle correspondant au résultat de la détection est exécuté, et une écriture partielle est exécutée, tandis que le comptage de temps de balayage de lignes de balayage sur ledit dispositif est interrompu, et
le nombre de lignes détectées lors d'un accès à ladite mémoire de stockage d'informations d'image jusqu'à l'interruption desdits premiers moyens en fonction du contenu de ladite deuxième unité à mémoire et du traitement de dessin, dont la commande est déclenchée par un balayage de la position d'une information d'image sur ledit dispositif d'affichage, est stocké dans ladite troisième mémoire, l'interruption du comptage de temps de balayages de lignes de balayage sur ledit dispositif est supprimée, et le traitement de dessin, dont la commande est déclenchée par un balayage de la position d'une information d'image sur ledit dispositif d'affichage, est achevé.

**9.** Appareil selon la revendication 1, dans lequel ledit appareil possède une fonction de comparaison, lorsque des adresses de lignes sont stockées dans ladite deuxième unité à mémoire, de valeurs des adresses dans un ordre d'accès, et de sélection d'une adresse de ligne devant être stockée en fonction du résultat de la comparaison.

**10.** Appareil selon la revendication 1, comportant en outre une unité de comparaison destinée, lorsqu'une adresse de ligne détectée et stockée pour la première fois doit être stockée dans ladite deuxième unité à mémoire, à comparer des coordonnées dans deux dimensions détectées et stockées pour la première fois avec une zone accédée jusqu'à l'achèvement du traitement de dessin dont la commande est déclenchée par un balayage de la position d'une information d'image sur ledit dispositif d'affichage, et à comparer des coordonnées dans deux dimensions, détectées et stockées précédemment, avec une zone accédée jusqu'à ce que le traitement de dessin s'achève.

**11.** Appareil selon la revendication 10, comportant en outre une quatrième mémoire commandée en fonction du résultat de la comparaison de ladite unité de comparaison,

dans lequel une information d'image pour une mémoire VRAM correspondant à la position d'une information d'image sur ledit dispositif d'affichage est commandée en fonction d'un état de ladite quatrième mémoire.

**12.** Système d'affichage comportant un panneau d'affichage et un appareil de commande d'informations d'images selon l'une quelconque des revendications précédentes 1 à 11.

FIG. 1

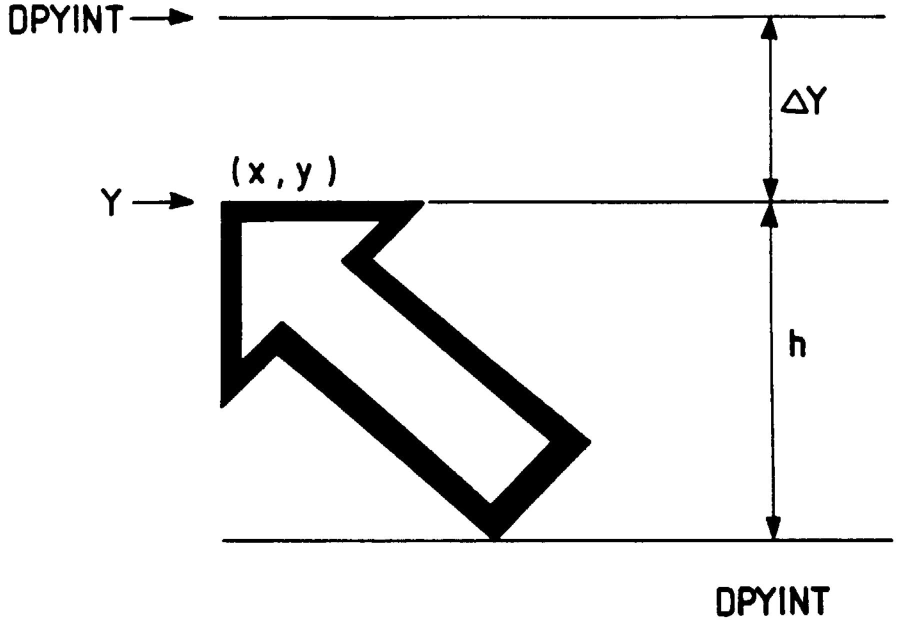


FIG. 5

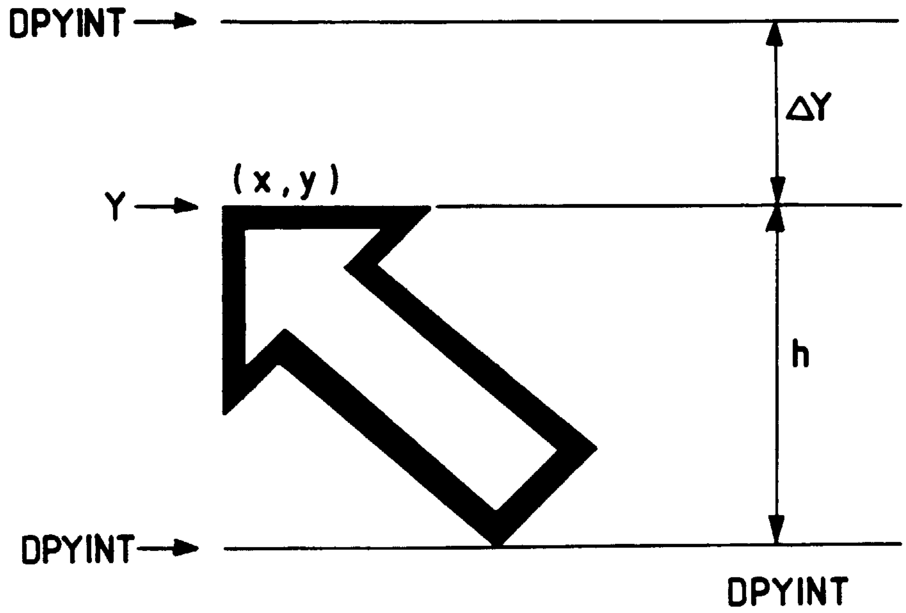

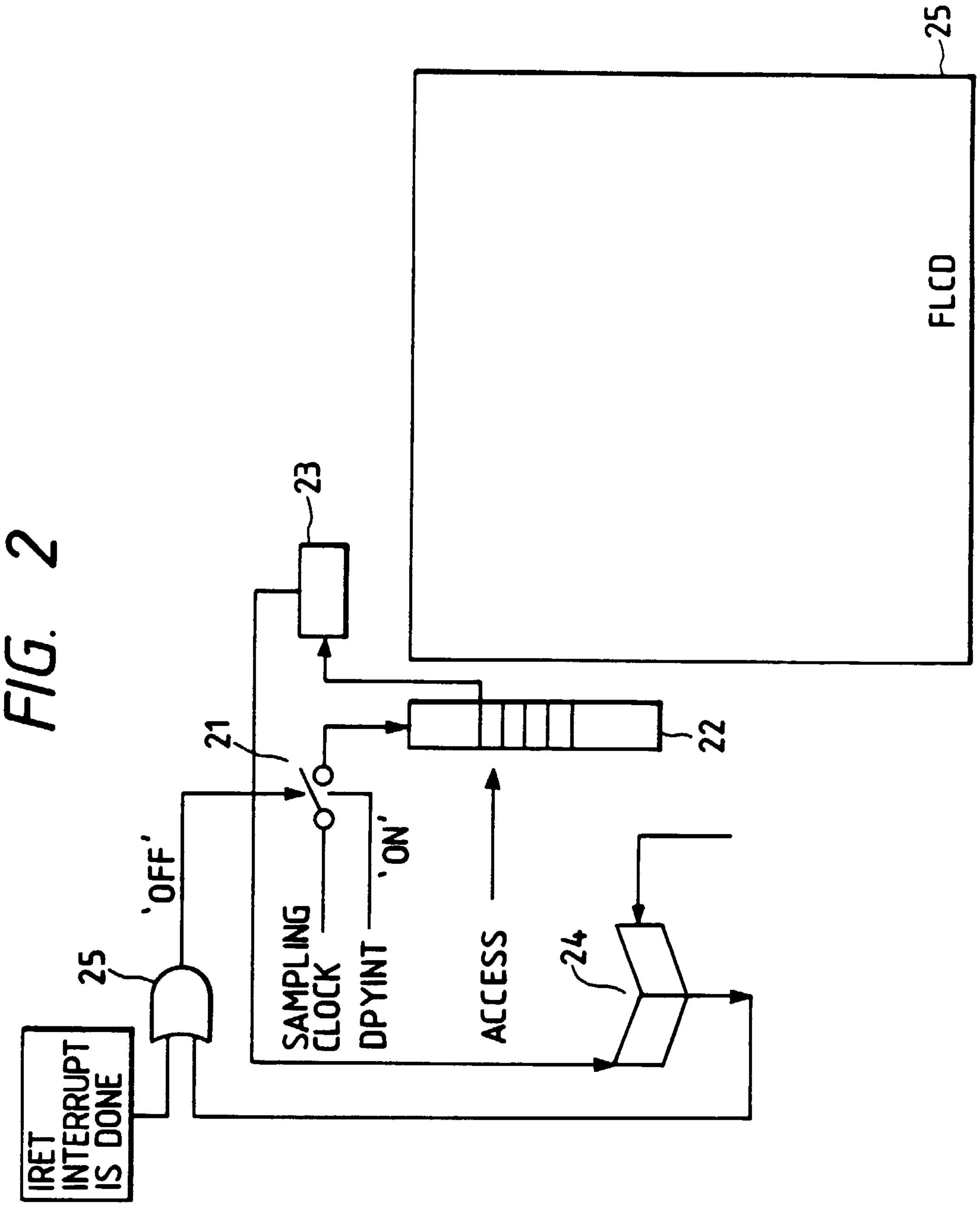
IRET
INTERRUPT
IS DONE
25
'OFF'
SAMPLING
CLOCK
DPYINT
'ON'
21
22
23
ACCESS
24
FLCD
25

FIG. 2

FIG. 3

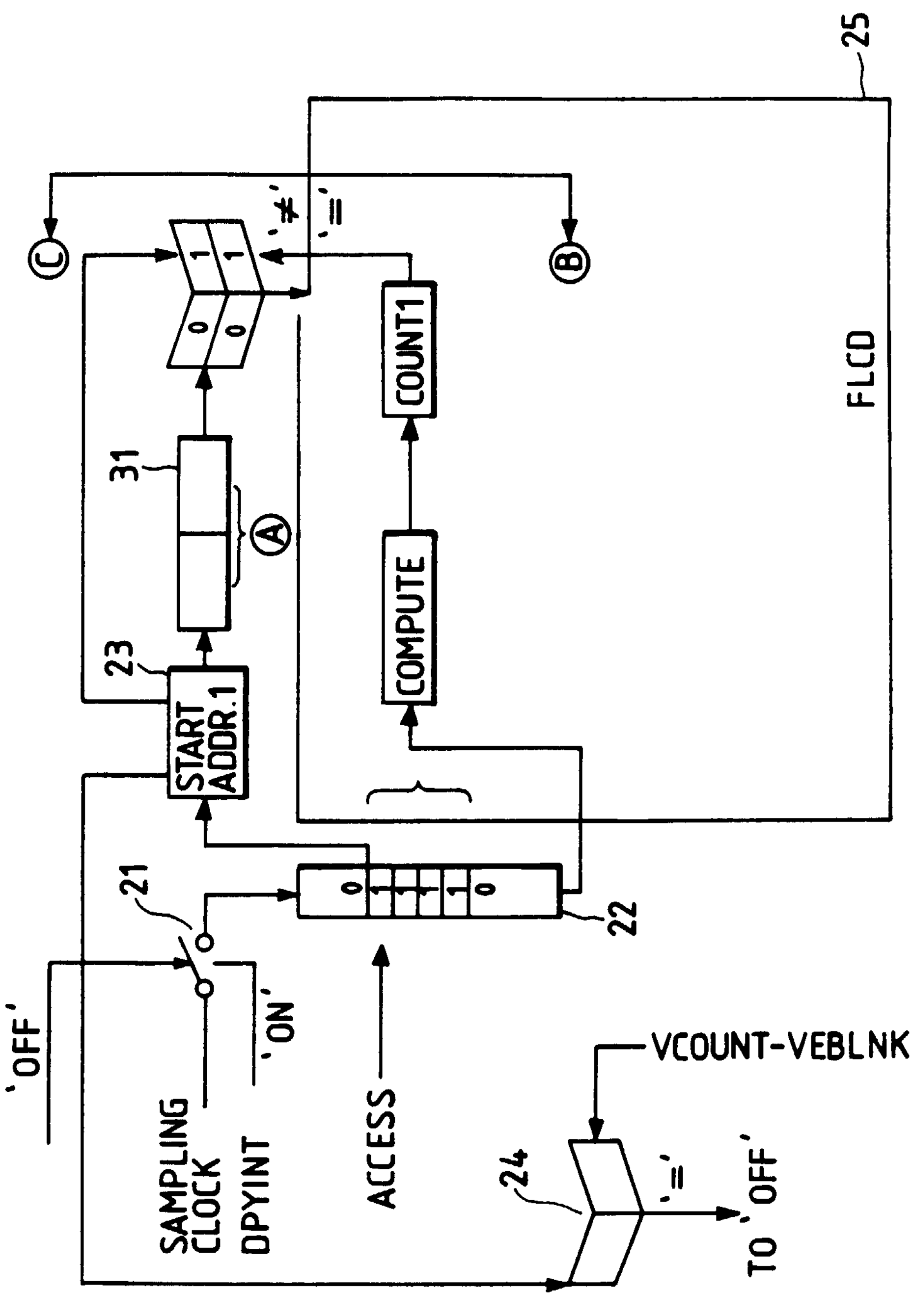
'OFF'
'ON'
SAMPLING CLOCK
DPYINT
21
22
ACCESS
START ADDR.1
23
31
A
COMPUTE
COUNT1
C
B
'≠'
'='
FLCD
25
VCOUNT-VEBLNK
24
'='
TO 'OFF'

FIG. 4

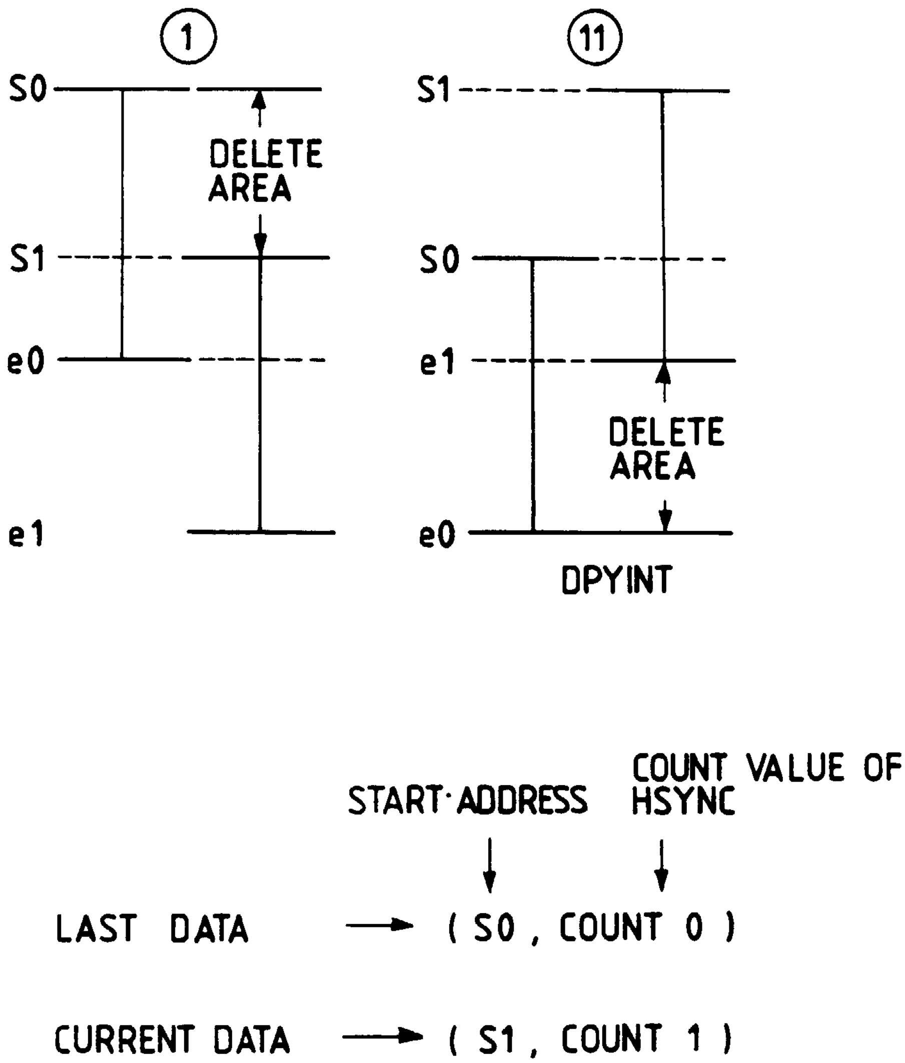
1
11
S0
S1
DELETE AREA
S1
S0
e0
e1
DELETE AREA
e1
e0
DPYINT
START·ADDRESS
COUNT VALUE OF HSYNC
LAST DATA
( S0 , COUNT 0 )
CURRENT DATA
( S1 , COUNT 1 )

FIG. 6

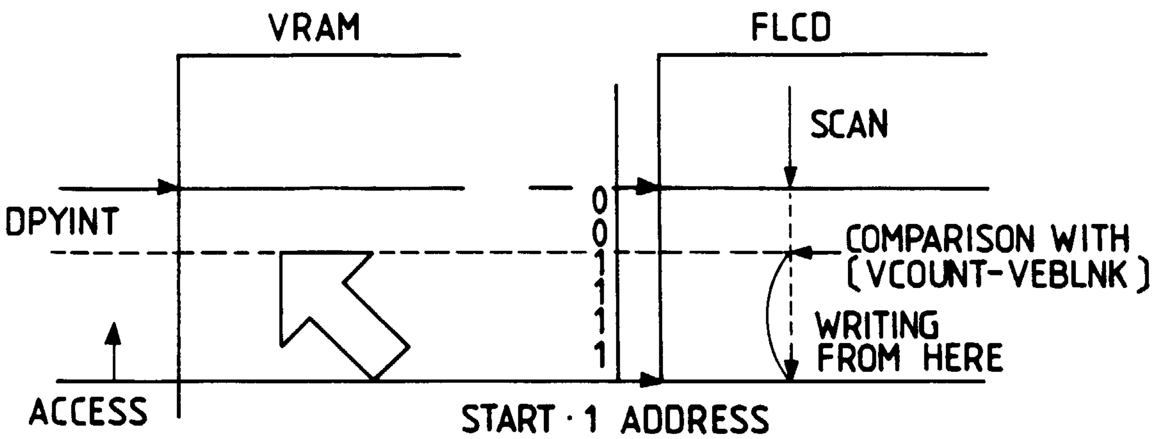
VRAM
FLCD
SCAN
DPYINT
0
0
1
1
1
1
COMPARISON WITH
(VCOUNT-VEBLNK)
WRITING
FROM HERE
ACCESS
START · 1 ADDRESS

FIG. 7

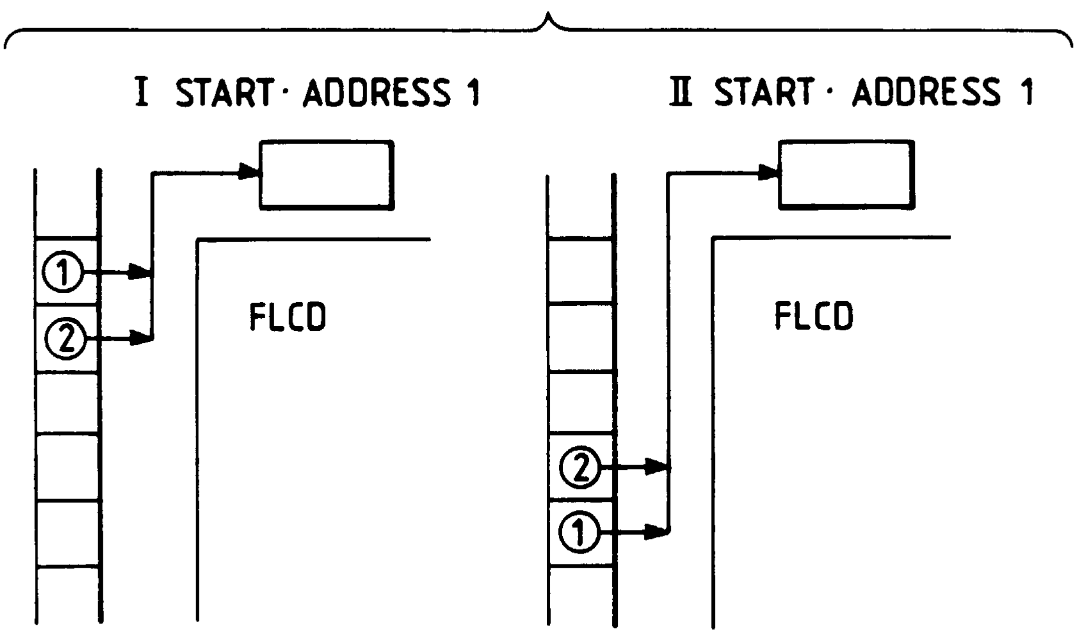
I START · ADDRESS 1
II START · ADDRESS 1
①
②
FLCD
②
①
FLCD

FIG. 8A

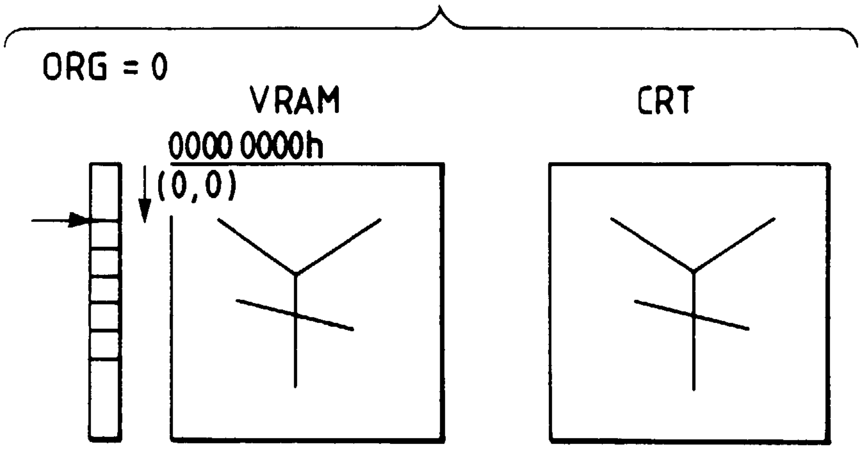


FIG. 8B

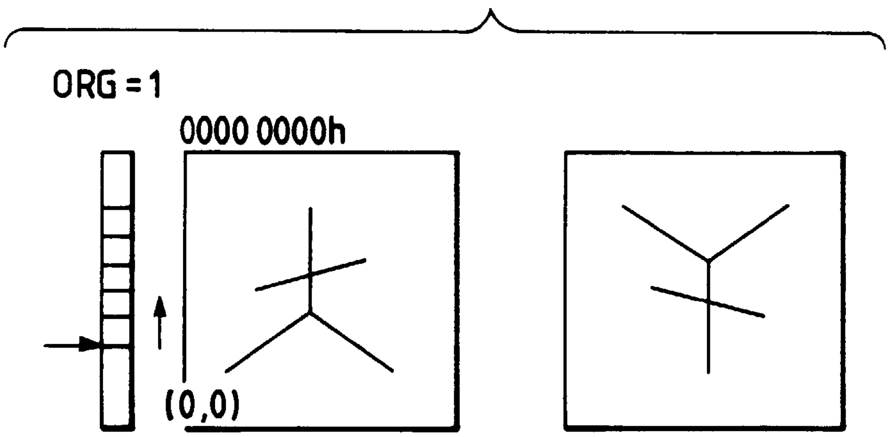


FIG. 8C

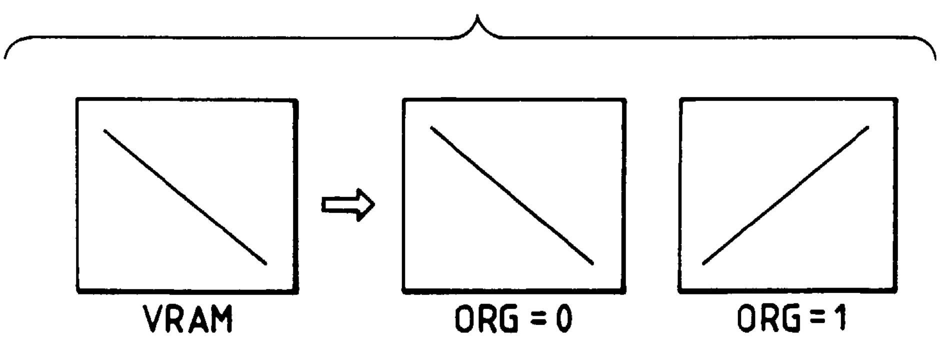

FIG. 9

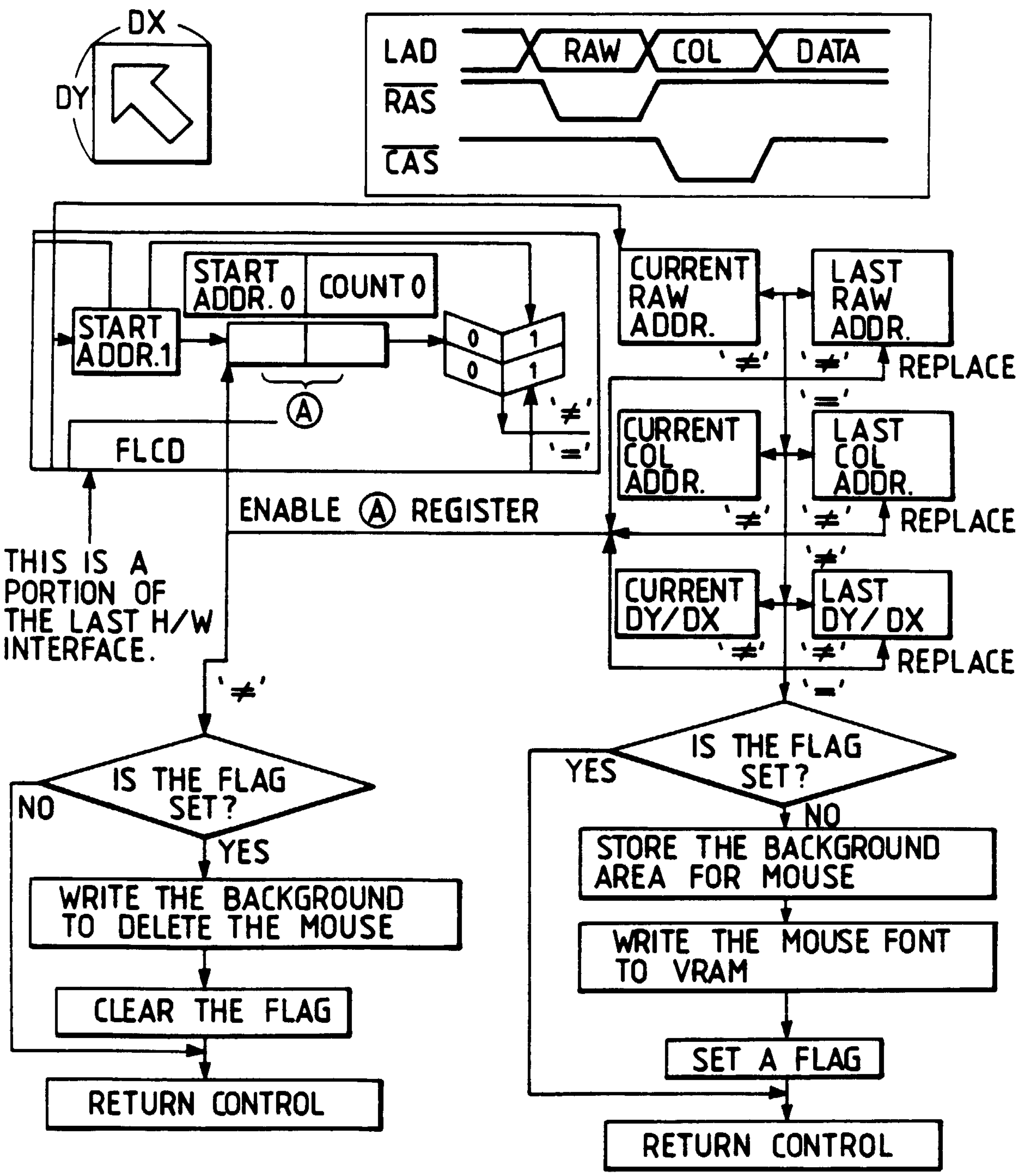
DX
DY
LAD
RAW
COL
DATA
RAS
CAS
START ADDR. 0
COUNT 0
START ADDR.1
0
1
0
1
Ⓐ
'≠'
'='
FLCD
CURRENT RAW ADDR.
LAST RAW ADDR.
'≠'
'≠'
REPLACE
'='
CURRENT COL ADDR.
LAST COL ADDR.
'≠'
'≠'
REPLACE
ENABLE Ⓐ REGISTER
'≠'
CURRENT DY/DX
LAST DY/DX
'≠'
'≠'
REPLACE
'='
THIS IS A PORTION OF THE LAST H/W INTERFACE.
'≠'
IS THE FLAG SET?
NO
YES
WRITE THE BACKGROUND TO DELETE THE MOUSE
CLEAR THE FLAG
RETURN CONTROL
IS THE FLAG SET?
YES
NO
STORE THE BACKGROUND AREA FOR MOUSE
WRITE THE MOUSE FONT TO VRAM
SET A FLAG
RETURN CONTROL

FIG. 10

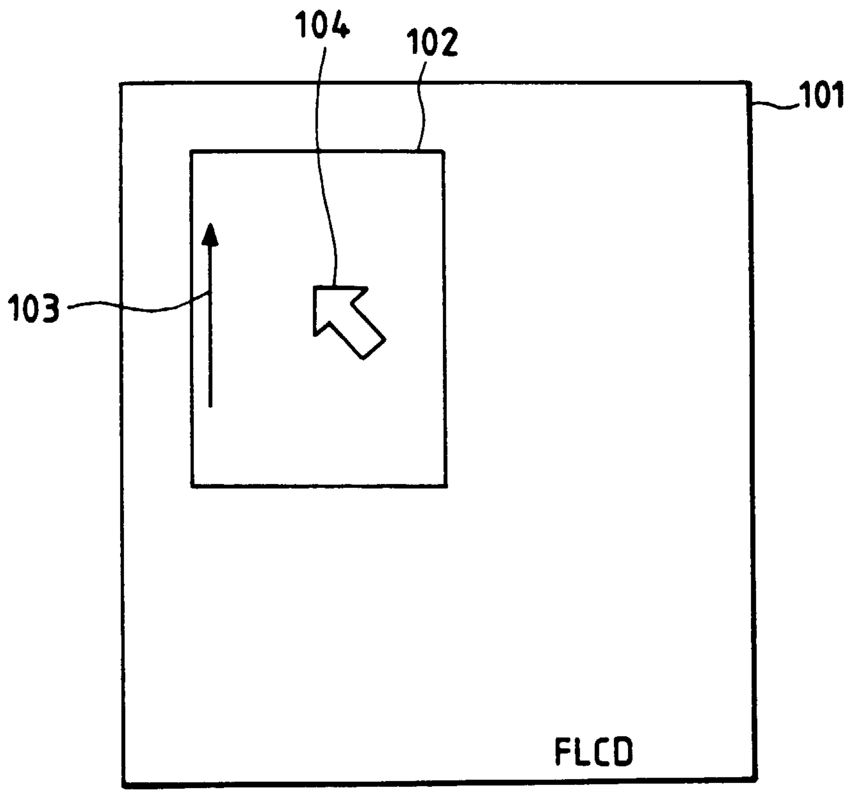

FIG. 11

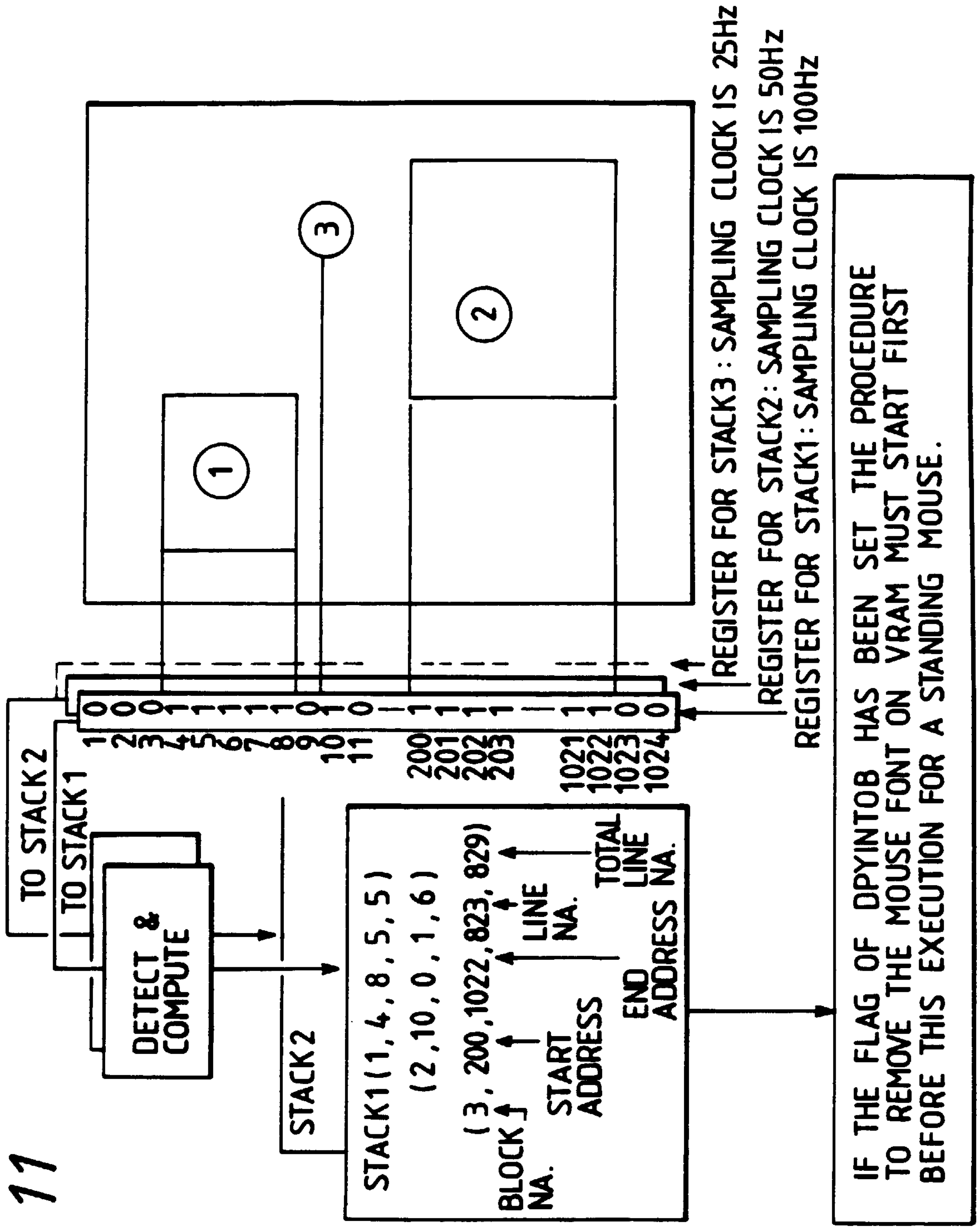

1
2
3
TO STACK 2
TO STACK 1
DETECT & COMPUTE
STACK 2
STACK1 ( 1 , 4 , 8 , 5 , 5 )
( 2 , 10 , 0 , 1 , 6 )
( 3 , 200 , 1022 , 823 , 829 )
BLOCK NA.
START ADDRESS
END ADDRESS
LINE NA.
TOTAL LINE ADDRESS NA.
1 2 3 4 5 6 7 8 9 10 11 200 201 202 203 1021 1022 1023 1024
0 0 0 1 1 1 1 1 0 1 0 1 1 1 1 1 1 0 0
REGISTER FOR STACK3 : SAMPLING CLOCK IS 25Hz
REGISTER FOR STACK2 : SAMPLING CLOCK IS 50Hz
REGISTER FOR STACK1 : SAMPLING CLOCK IS 100Hz
IF THE FLAG OF DPYINTOB HAS BEEN SET THE PROCEDURE TO REMOVE THE MOUSE FONT ON VRAM MUST START FIRST BEFORE THIS EXECUTION FOR A STANDING MOUSE.

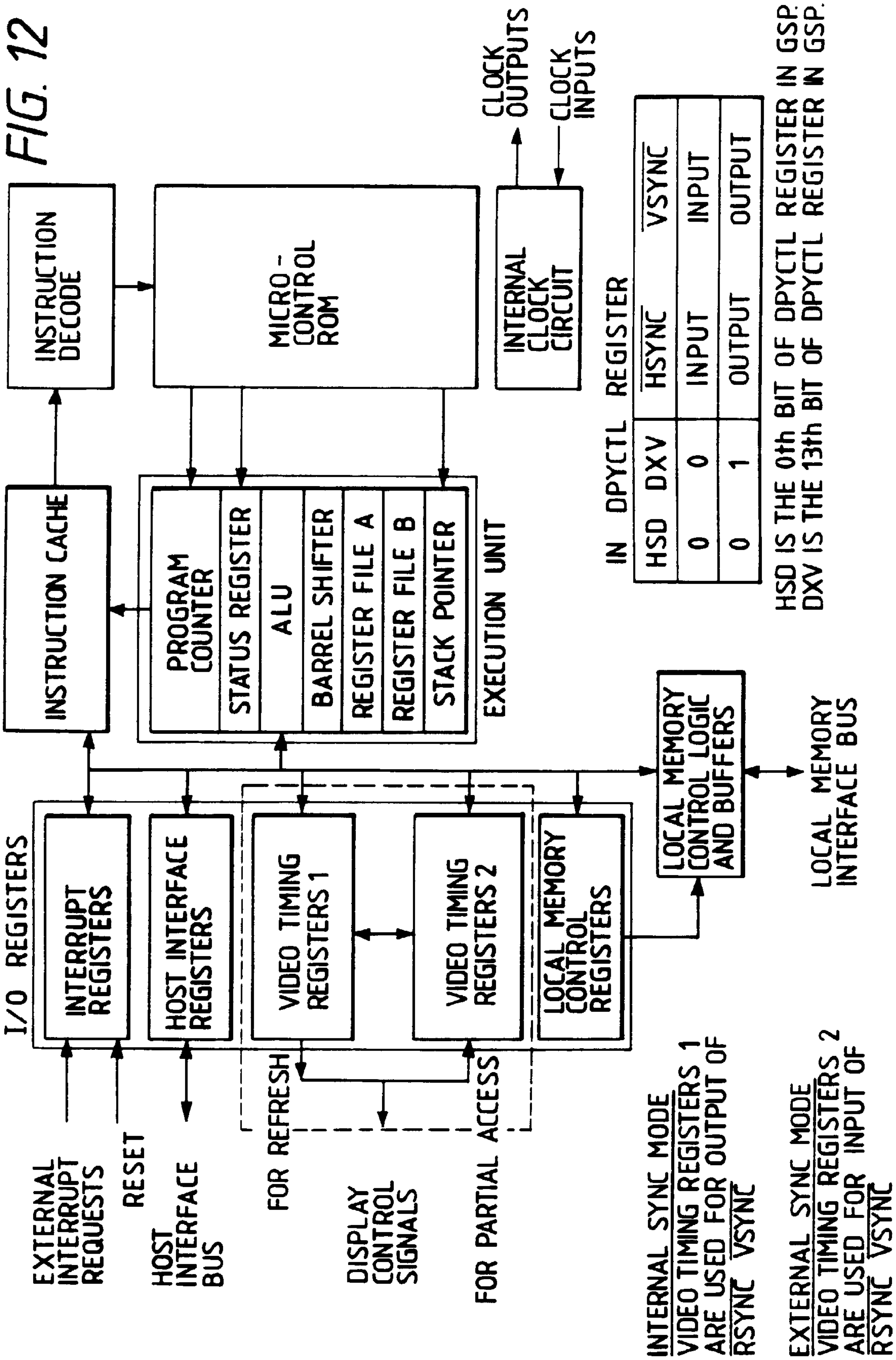
I/O REGISTERS
INTERRUPT REGISTERS
HOST INTERFACE REGISTERS
VIDEO TIMING REGISTERS 1
VIDEO TIMING REGISTERS 2
LOCAL MEMORY CONTROL REGISTERS
EXTERNAL INTERRUPT REQUESTS
RESET
HOST INTERFACE BUS
FOR REFRESH
DISPLAY CONTROL SIGNALS
FOR PARTIAL ACCESS
INSTRUCTION CACHE
INSTRUCTION DECODE
MICRO-CONTROL ROM
PROGRAM COUNTER
STATUS REGISTER
ALU
BARREL SHIFTER
REGISTER FILE A
REGISTER FILE B
STACK POINTER
EXECUTION UNIT
INTERNAL CLOCK CIRCUIT
CLOCK OUTPUTS
CLOCK INPUTS
LOCAL MEMORY CONTROL LOGIC AND BUFFERS
LOCAL MEMORY INTERFACE BUS
IN DPYCTL REGISTER
HSD | DXV | HSYNC | VSYNC
0 | 0 | INPUT | INPUT
0 | 1 | OUTPUT | OUTPUT
HSD IS THE 0th BIT OF DPYCTL REGISTER IN GSP.
DXV IS THE 13th BIT OF DPYCTL REGISTER IN GSP.
INTERNAL SYNC MODE
VIDEO TIMING REGISTERS 1 ARE USED FOR OUTPUT OF RSYNC VSYNC
EXTERNAL SYNC MODE
VIDEO TIMING REGISTERS 2 ARE USED FOR INPUT OF RSYNC VSYNC

FIG. 12

FIG. 13

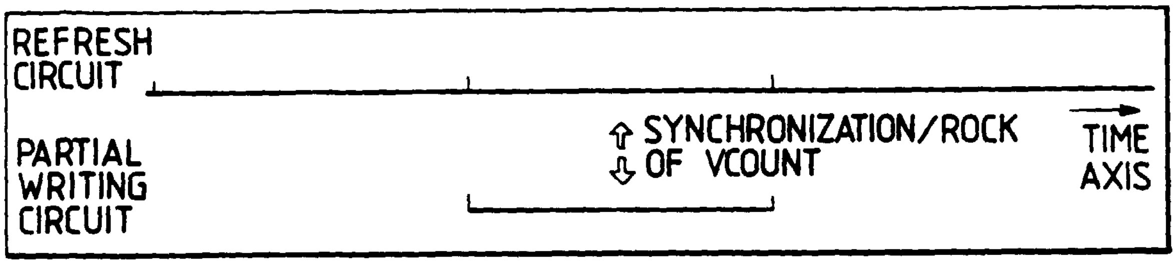
REFRESH CIRCUIT
PARTIAL WRITING CIRCUIT
SYNCHRONIZATION/ROCK OF VCOUNT
TIME AXIS

FIG. 14

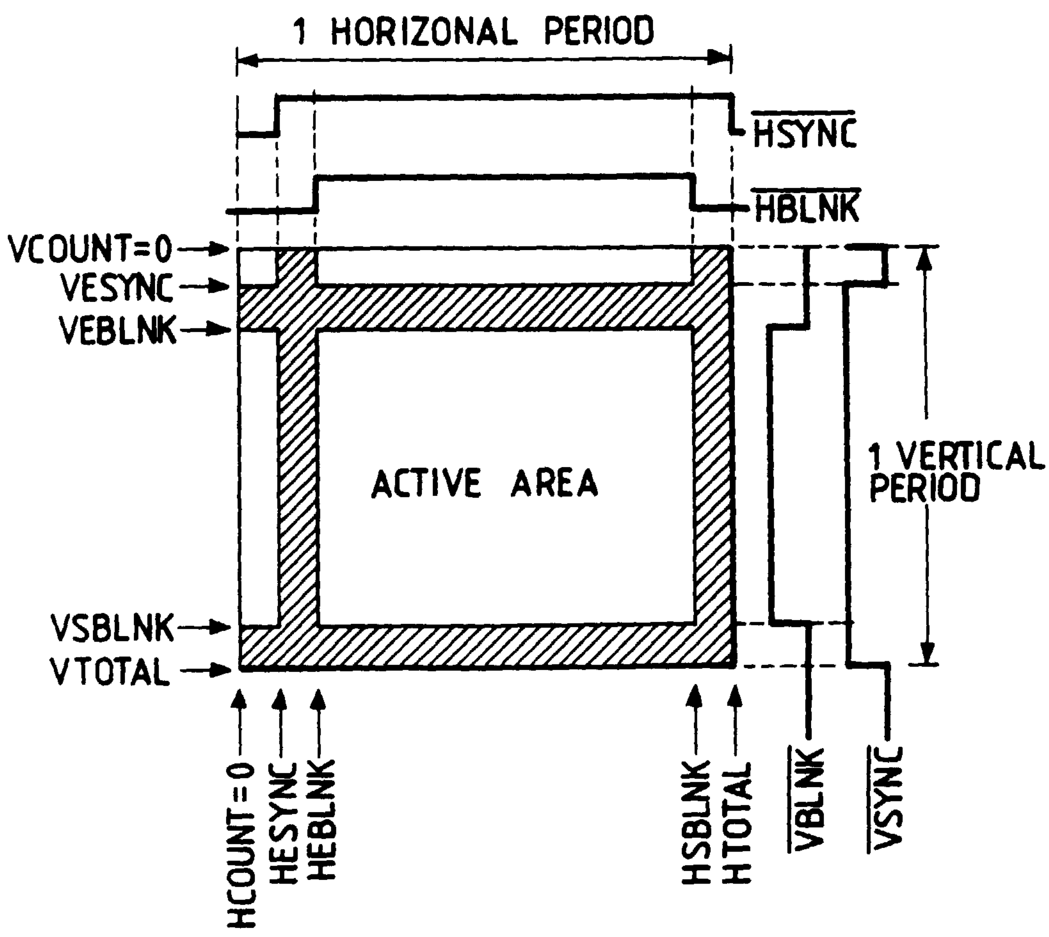
1 HORIZONAL PERIOD
HSYNC
HBLNK
VCOUNT=0
VESYNC
VEBLNK
ACTIVE AREA
1 VERTICAL PERIOD
VSBLNK
VTOTAL
HCOUNT=0
HESYNC
HEBLNK
HSBLNK
HTOTAL
VBLNK
VSYNC

FIG. 15

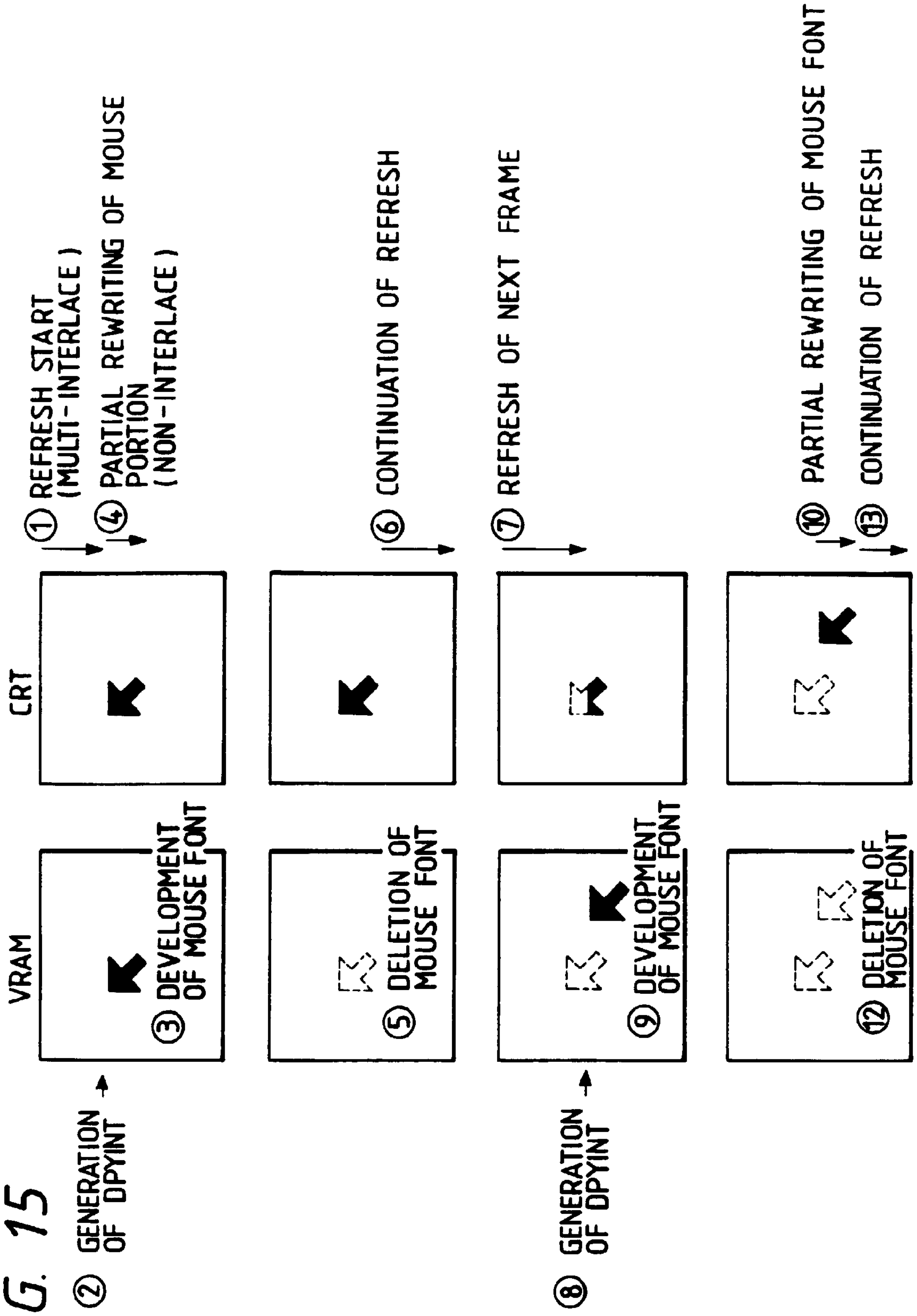
VRAM
CRT
② GENERATION OF DPYINT
③ DEVELOPMENT OF MOUSE FONT
① REFRESH START (MULTI-INTERLACE)
④ PARTIAL REWRITING OF MOUSE PORTION (NON-INTERLACE)
⑤ DELETION OF MOUSE FONT
⑥ CONTINUATION OF REFRESH
⑦ REFRESH OF NEXT FRAME
⑧ GENERATION OF DPYINT
⑨ DEVELOPMENT OF MOUSE FONT
⑩ PARTIAL REWRITING OF MOUSE FONT
⑫ DELETION OF MOUSE FONT
⑬ CONTINUATION OF REFRESH

FIG. 16

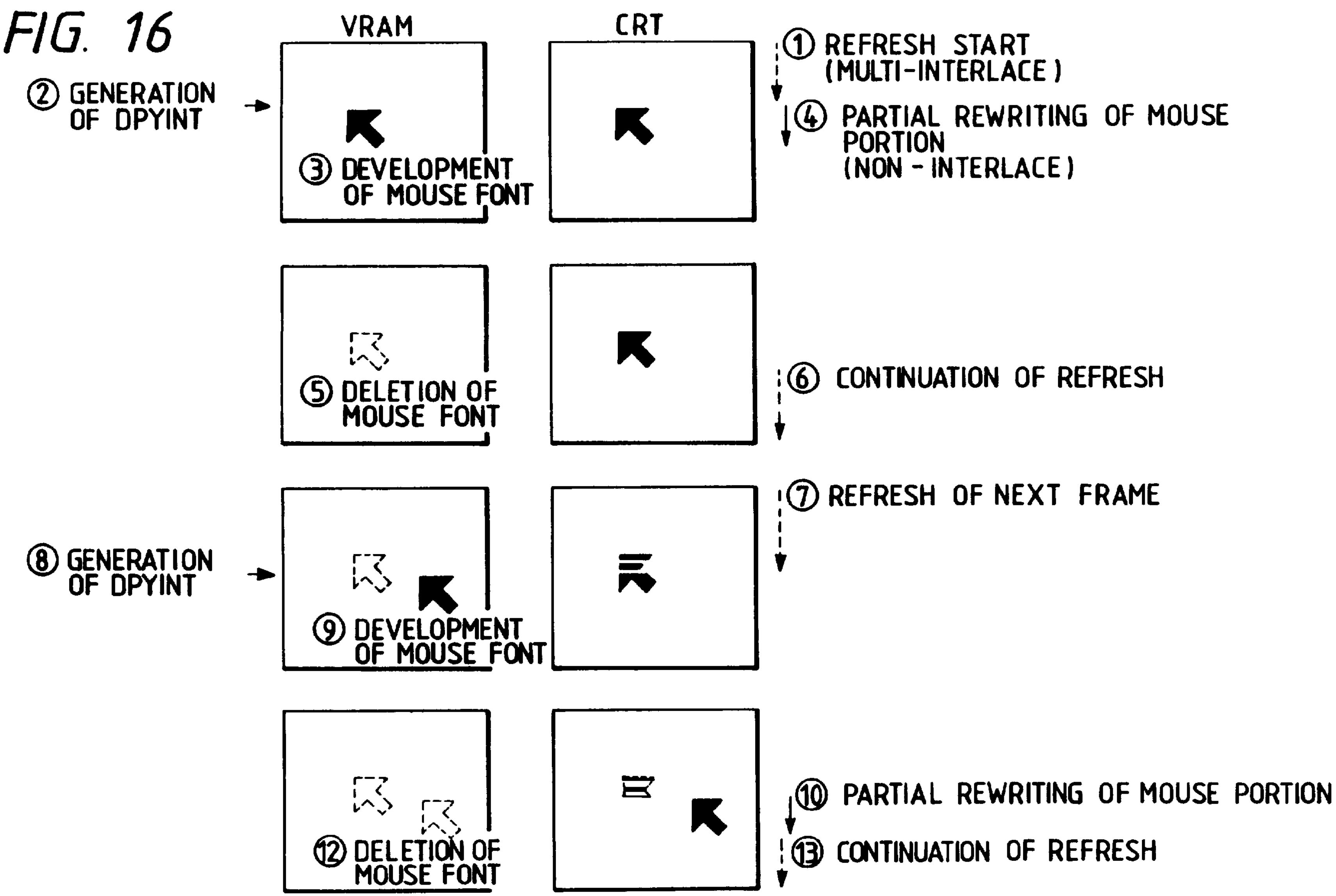
VRAM
CRT
① REFRESH START (MULTI-INTERLACE)
② GENERATION OF DPYINT
③ DEVELOPMENT OF MOUSE FONT
④ PARTIAL REWRITING OF MOUSE PORTION (NON-INTERLACE)
⑤ DELETION OF MOUSE FONT
⑥ CONTINUATION OF REFRESH
⑦ REFRESH OF NEXT FRAME
⑧ GENERATION OF DPYINT
⑨ DEVELOPMENT OF MOUSE FONT
⑩ PARTIAL REWRITING OF MOUSE PORTION
⑫ DELETION OF MOUSE FONT
⑬ CONTINUATION OF REFRESH

FIG. 17

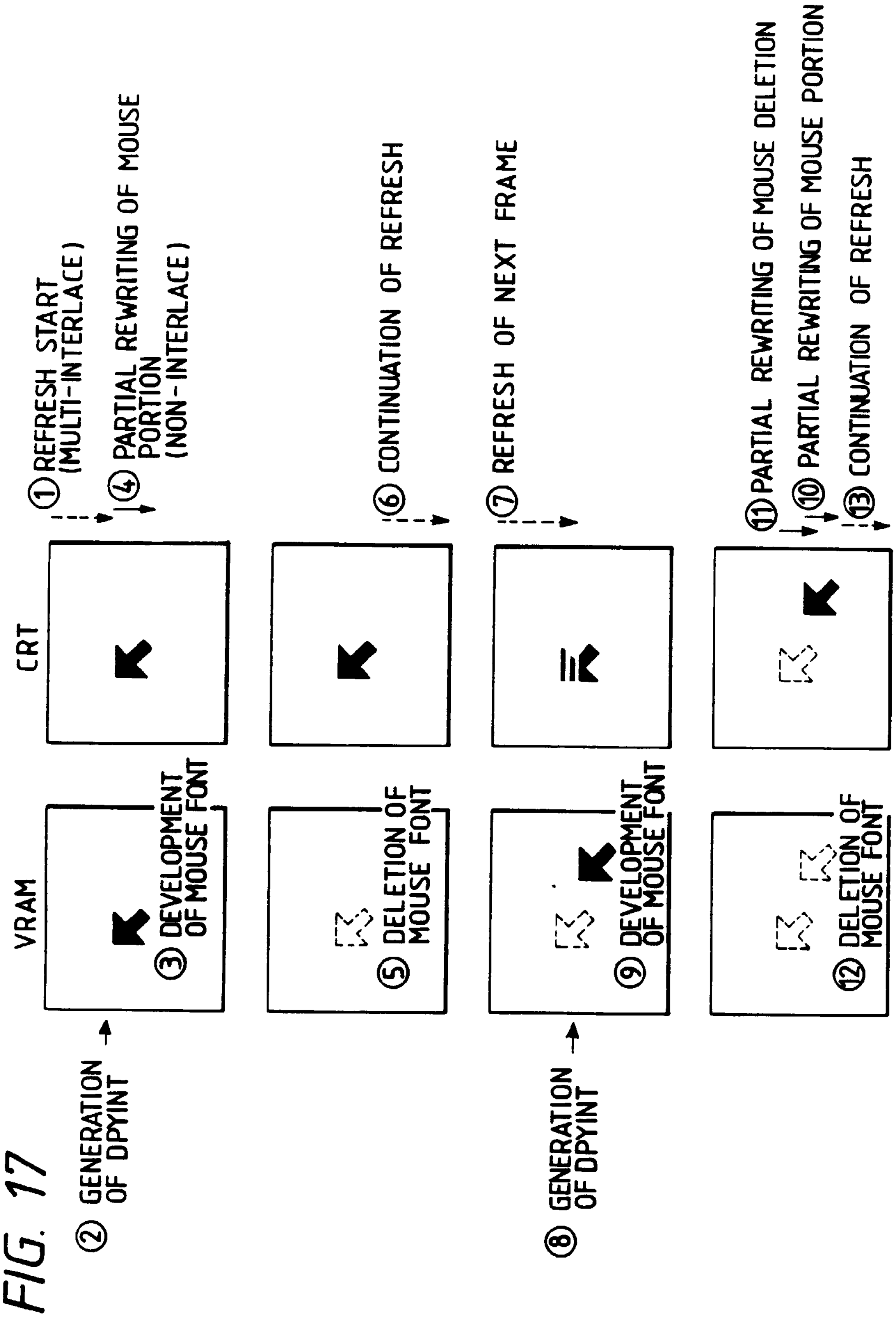
VRAM
CRT
② GENERATION OF DPYINT
③ DEVELOPMENT OF MOUSE FONT
① REFRESH START (MULTI-INTERLACE)
④ PARTIAL REWRITING OF MOUSE PORTION (NON-INTERLACE)
⑤ DELETION OF MOUSE FONT
⑥ CONTINUATION OF REFRESH
⑦ REFRESH OF NEXT FRAME
⑧ GENERATION OF DPYINT
⑨ DEVELOPMENT OF MOUSE FONT
⑪ PARTIAL REWRITING OF MOUSE DELETION
⑩ PARTIAL REWRITING OF MOUSE PORTION
⑬ CONTINUATION OF REFRESH
⑫ DELETION OF MOUSE FONT